# EUROPEAN PATENT SPECIFICATION

(11) **EP 4 497 974 B1**
(45) Date of publication and mention of the grant of the patent: **09.09.2026**
(21) Application number: 24189643.0
(22) Date of filing: 19.07.2024
(51) Int. Cl.: F16H 37/04, F16H 3/093

(54) **IMPROVED TRANSMISSION ARCHITECTURE FOR AGRICULTURAL VEHICLES**
VERBESSERTE GETRIEBEARCHITEKTUR FÜR LANDWIRTSCHAFTLICHE FAHRZEUGE
ARCHITECTURE DE TRANSMISSION AMÉLIORÉE POUR VÉHICULES AGRICOLES

(30) Priority: 24.07.2023 IT 202300015477
(43) Date of publication of application: 29.01.2025
(73) Proprietor: CNH Industrial Italia S.p.A., 10156 Torino (IT)
(72) Inventor: FORTE, Michelantonio, 10156 Turin (IT)
(74) Representative: CNH Industrial IP Department

(56) References cited:
- WO-A1-2018/113835
- FR-A1- 2 531 515

## Description

### TECHNICAL FIELD

The present invention relates to a transmission architecture, in particular a transmission architecture for an off-road vehicle such as an agricultural vehicle and to a related method for controlling the gear shifting of such transmission.

### BACKGROUND OF THE INVENTION

Transmissions for off-road vehicles such as agricultural vehicles offer different configuration, for instance:
- manual shifted transmissions, in which all gears of the transmissions are engaged directly by the driver through lever mechanisms which command clutches, synchronizers and dog clutches to select the gear;
- semi-powershift transmission, in which some gears are engaged, manually or automatically, thanks to servo actuated mechanisms in powershift mode, i.e. by swapping the torque by a couple of clutches, and in which other gears are actuated by lever mechanisms which commands clutches, synchronizers and dog clutches to select the gear or by a servo-actuated mechanism which is not in powershift mode, i.e. which uses a single clutch and, when such clutch is opened, torque cannot pass through the transmission; and
- full powershift transmission, in which all gears of the transmission are engaged through servo actuated mechanism in powershift mode.

An important request that must be satisfied in modern mechanical transmission for agricultural vehicles is to have high efficiency across the full ground speed range, in order to improve the vehicle fuel consumption. In this respect a large use of wet clutches to build the semi-powershift or the full-powershift transmissions, generates more power losses inside the transmission when compared to the use of synchronizers and dog-clutches and, as consequence, a penalty of efficiency as consequence.

For this reason, in the art, the dual-clutch transmission, DCT, architecture is considered the most valuable layout for powershift transmissions in order to satisfy all the previous demands:
- it provides a high number of speed ratios with a mechanism that allow for a comfortable powershift (by swapping one couple of clutches); and
- it performs high efficiency, because a powershift layout is provided by only few couples of wet clutches accompanied by many synchronizers and dog-clutches.

Because of these advantages, recently DCT architecture has been applied in the field of the transmissions for agricultural vehicles. An example of such DCT architecture is disclosed in patent document IT102022000024729 A1.

However new requirements request higher speeds of the agricultural vehicles in a wide torque range. This lead to difficulty in gear shifting due to high inertia between the different branches of the transmission.

Moreover, the need of providing more and more transmission stages would lead to high encumbrance and high weight transmission.

Examples of known transmission architectures are shown in patent publications FR2531515 A1 or WO2018/113835 A1. FR2531515 A1 discloses a gear ratio stage that comprises an even-odd stage and a first jump stage, where said even-odd stage and said first jump stages both comprise a first and second shafts. In addition, the first jump stage comprises a first, a second and a third clutch means, a second support shaft, a third support shaft and a first and a second gearings.

Therefore, the need is felt to solve the aforementioned drawbacks in order to maintain a wide range of transmittable torque, at high speeds but with smoother gear shifting and by reducing inertia in different branchers of the transmission.

Furthermore, it is requested to reduce encumbrances of the transmission, its manufacturing time and therefore its costs.

Aim of the present invention is to satisfy the above-mentioned needs in a cost-effective and optimized way.

### SUMMARY OF THE INVENTION

According to the invention, the aforementioned aim is reached by an architecture for a dual clutch transmission according to claim 1 and a related control method according to claim 10. The dependent claims show further advantageous embodiments of the invention.

### BRIEF DESCRIPTION OF THE DRAWINGS

For a better understanding of the present invention, a preferred embodiment is described in the following, by way of a non-limiting example, with reference to the attached drawings wherein:
- Figure 1 is a schematic representation of a transmission architecture according to the present invention;
- Figure 2 is a schematic representation of the transmission architecture of figure 1 showing concerned power flows in an exemplarily operative condition; and
- Figure 3 is a table indicating the activation of elements of the transmission architecture according to the invention.

### DETAILED DESCRIPTION OF THE INVENTION

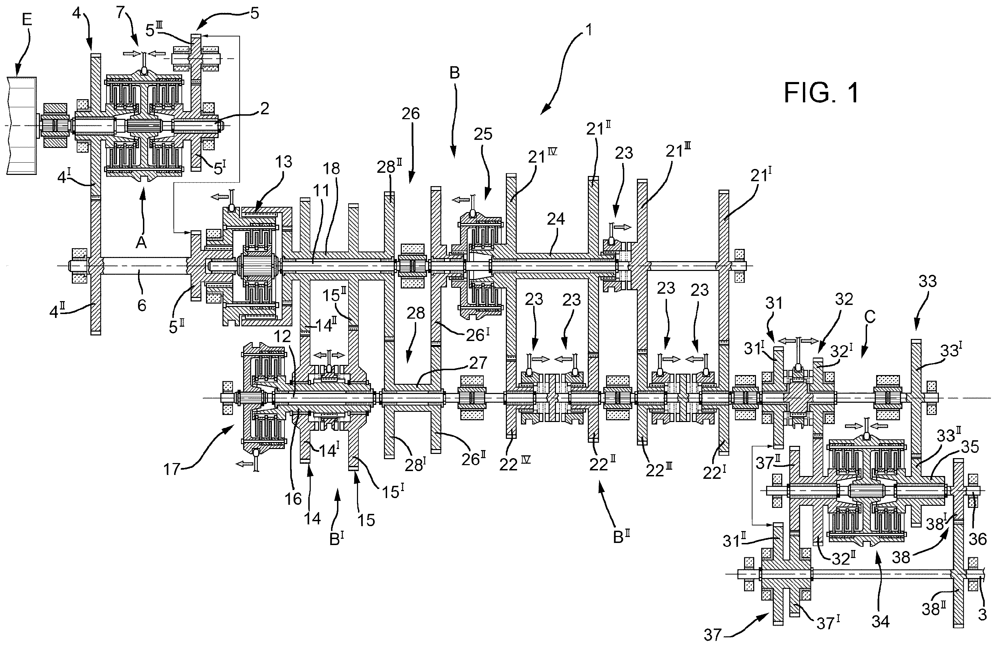

Figure 1 discloses a transmission 1 for an off-road vehicle, such as an agricultural vehicle, e.g. a tractor (not illustrated), comprising an engine input shaft 2, operatively connected to a torque source E, such as an internal combustion engine of the work vehicle, and an output shaft 3, which can be coupled to a drive axle of the off-road vehicle.

The transmission 1 essentially comprises, operatively connected in series one to the other between input shaft 2 and output shaft 3, an input stage A, a gear ratio stage B, and a range gear ratio stage C.

The input stage A may be realized in different manner in order to vary rotational direction of input shaft 2 towards gear ratio B, i.e. between a forward motion and a rearward motion.

In the exemplarily disclosed embodiment, the input stage A comprises a first and a second gearings 4, 5 selectively connectable to a first support shaft 6. The first gearing 4 comprises a first wheel 4' rotatably carried by input shaft 2 and a second wheel 4" carried in a fixed manner by the first support shaft 6 while the second gearing comprises a first wheel 5' rotatably carried by input shaft 2 and a second wheel 5" carried in a fixed manner by the first support shaft 6 and a third wheel 5‴ operatively interposed between the first and the second wheels 5', 5". The first wheels 4', 5' of gearings 4, 5 are selectively fixed to the input shaft 2 via clutch means 7.

The first support shaft provides input torque to the gear ratio stage B. In particular, this latter comprises a jump stage B' and an even-odd stage B".

In detail, jump stage B' defines at least a pair of jump gear ratios configured to be intermediate torque gear ratio between the plurality of gear ratios defined by even-odd stage B'.

In detail, the jump stage B' comprises a pair of shafts, namely a odd shaft 11 and an even shaft 12 that are commonly part of the even-odd stage B'.

In detail, the jump stage B' comprises clutch means 13 configured to selectively connect together the first support shaft 6 and the odd shaft 11.

The jump stage B' comprises at least a pair of gearings 14, 15 selectively connectable to a second support shaft 16. The first gearing 14 comprises a first wheel 14' rotatably carried by first support shaft and a second wheel 14" carried in a fixed manner by a third support shaft 18 while the second gearing comprises a first wheel 15' rotatably carried by second support shaft 16 and a second wheel 15" carried in a fixed manner by the third support shaft 18.

In detail, the third support shaft 18 is rotatably free carried by the odd shaft 11 and is operatively engaged by the first support shaft 6 by an intermediate gearing 19. On the other side, the second support shaft 16 is rotatably carried by even shaft 12 and is selectively fixedly coupled to this latter via clutch means 17.

The gear ratio stage B comprises a plurality of gears 21, 22 accommodated on respectively even or odd shafts 11, 12 and having a different size one with respect to the other.

Preferably the even shaft 11 may carry four gears 21, namely a first gear 21^{I} having the biggest diameter, a fourth gear 21^{IV} having the smallest diameter and a second and third gears 21^{II}, 21^{III} having respective diameters comprised between the ones of first and the fourth gears 21^{I}, 21^{IV}.

The odd shaft 12 may carry four gears 22, namely a first gear 22^{I} having the biggest diameter, a fourth gear 22^{IV} having the smallest diameter and a second and third gears 22", 22^{III} having respective diameters comprised between the ones of first and the fourth gears 22^{I}, 22^{IV}.

Advantageously, the gears 21 and 22 have the same diameter of the gear 21, 22 with which each meshes.

The gears of gears sets 21, 22, when selected, represent the different speed ratios of the transmission, namely a first, a second, a third, a fourth, a fifth, a sixth and a seventh speed ratio according to the specific selection of one of the aforementioned wheels 21, 22.

In details wheels 22 are supported in a rotatable free manner the respective even shaft 12, e.g. by means of bearings, so that they are not forced to rotate to the same speed of the respective even shaft 12. In particular, they are fixedly engaged to the even shaft 12 by coupling means 23 such as dog clutches.

In particular, even shaft 12 may comprise two dog clutches 17 interposed respectively between the gear 15^{I}- 15^{III} and 15^{II}-15^{IV}.

With respect to odd gears, at least one gear 21^{I}, 21^{II} is carried fixedly by odd shaft 11 while the remaining ones 21^{I}, 21^{IV} are carried by an auxiliary shaft 24 that is carried in a rotatably free manner over odd shaft 11.

In detail, the second and fourth wheels 21", 21^{IV} are carried rigidly by the auxiliary shaft 24 while the first and third wheels 21^{I}, 211^{III} are carried rigidly by odd shaft 11.

In particular, the auxiliary shaft 24 is selectively connectable to the odd shaft 11 via coupling means 23 such as the one above described.

In further detail, the auxiliary shaft 24 is further selectively connectable to the jump stage B', in detail to third support shaft 18. According to the shown embodiment, the auxiliary shaft 24 is connectable via clutch means 25 to a gearing 26 comprising a first wheel 26' rotatably free carried by odd shaft 11 and a second wheel 26" fixedly carried by a fourth support shaft 28 rotatably free carried on even shaft 12. The fourth support shaft 28 is connected to the third support shaft 18 via a gearing 28 comprising a first wheel 28' rigidly carried by the fourth support shaft 28 and a second wheel 28" rigidly carried by the third support shaft 18.

The range gear stage C adds a plurality of additional gear ratio that are combined with the gear ratios defined by the gear ratio stage. In the disclosed embodiment, three range gear ratio are provided.

The range gear ratio stage C then comprises a first, a second and a third range gearings 31, 32, 33 each comprising a first wheel 31', 32', 33' and a second wheel 31", 32", 33". In particular, first gearing is the so-called medium range, the second gearing is the so-called low range and the third gearing is the so-called fast range.

The first wheels 31', 32' of the first and second range gearings 31', 31" are rotatably free carried by even shaft 12 while the first wheel 33' of the third range gearing 33 is fixedly carried by the even shaft 12 and the second wheel 33" of the third range gearing 33 is rotatably free carried by a further auxiliary shaft 36.

In detail, the second wheel 33" of the third range gearing 33 is connectable to the further auxiliary shaft 36 via clutch means 34 and then, via a gearing 38 to the output shaft 3. In detail, gearing 38 comprises a first wheel 38' rigidly carried by the further auxiliary shaft 36 and a second wheel 38" rigidly carried by the output shaft 3.

The second wheel 32" of the second range gearing 32 is selectively fixed to the further auxiliary shaft via clutch means 34, preferably realized in common with the aforementioned ones.

The second gear 31" of the first range gearing 31 is coupled to the second gear 32" of the second range gearing 32 via a gearing 37 comprising a first wheel 37' rigidly carried with the second gear 31" of the first range gearing 31 and a second wheel 37" rigidly carried with the second gear 32" of the second range gearing 32.

The above described clutches 7, 13, 17, 25, 34 and coupling means 23 can be selected by respective actuators (not shown) that are controlled by an electronic control unit (not shown). The electronic control unit controls said clutches or said control means by sending control electric signals directed to the respective clutches or coupling means to be controlled.

The electronic control unit can be either the ECU of the vehicle or driveline ECU of the vehicle. The electronic control unit is configured to control the above cited elements of the transmission 1 as per direct input command of the user of the vehicle or in automatic way following the shift control logic deployed into a specific software code, which can be memorized into the electronic unit.

The vehicle may be provided by a dedicated control software code in the ECU of the transmission configured to recognize signals from sensors installed on the vehicle, e.g. the torque demand at the output shaft 3 and the speed of the engine input shaft 2, and automatically define the gearshift without any user intervention.

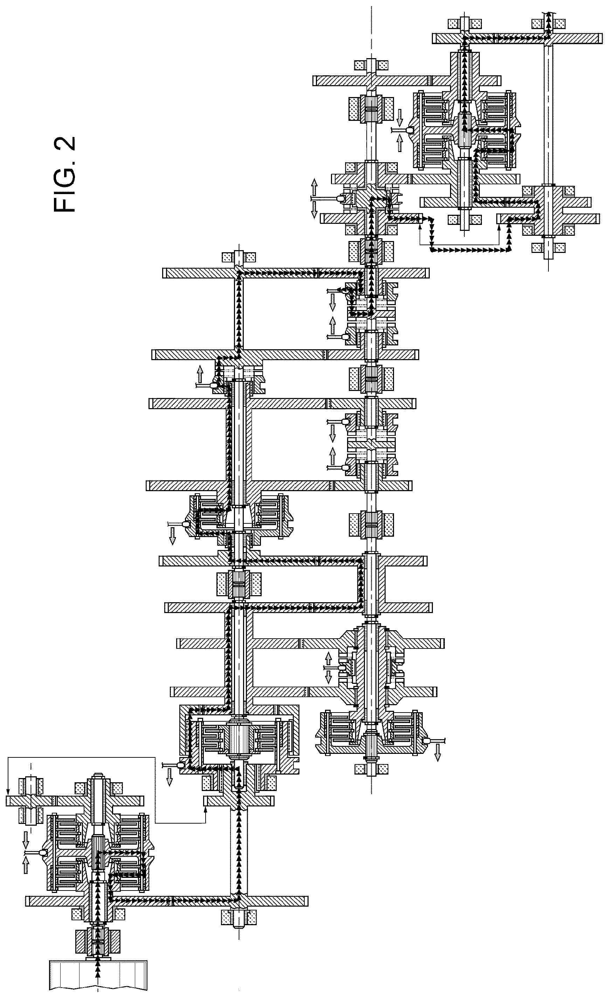

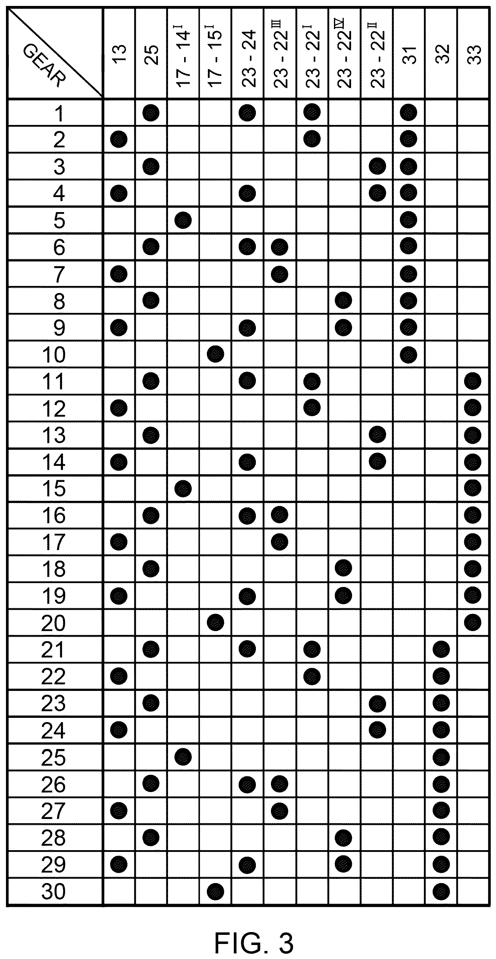

The operation of the transmission 1 according to the invention are described in the following making reference to figure 2 and to table of figure 3.

The vehicle is driving, e.g. forward, in I gear ratio, i.e. in the configuration shown in figure 2. In such configuration, the torque passes therefore from input module A from input shaft 2 toward first support shaft 6. If reverse motion is needed, input stage A is controlled accordingly.

In figure 2 configuration the clutch 13 is disengaged then torque passes via third support shaft 18 and gearings 28, 26 towards auxiliary shaft 24 via clutch 25and then to wheel 22^{I} that is engaged to even shaft 12. With respect to range, the second range gear wheel 31^{I} is selected and torque flows via gearing 37 and clutches 34 towards output shaft.

In order to pass to second gear ratio, it is sufficient to swap clutch 13 to obtain a different torque ratio. Then to pass to third gear ratio, the related gear can be preselected and clutches 13 and 25 thereby obtaining a powershift shifting.

Similar condition is achieved, as listed in the table, via jump gear ratio eleven and twenty-one by swapping also the other clutch means.

The remaining gear ratios and derivable pre-selection of gears and swap of clutches are disclosed in the summarizing table of figure 3 and are not further reported for sake of brevity.

Due to the proposed ten gears ratio and the three range gear ratio, the transmission is provided with overall thirty gear ratio, as listed.

The invention also comprises a method for operating a transmission 1 as described above for shifting from a gear ratio of the gear ratio stage B to a requested gear ratio of the gear ratio stage B and comprising the following steps:
- i) receiving an input for shifting from a gear ratio of gear ratio stage B to a requested gear ratio of the gear ratio stage B;
- ii) if the requested gear ratio foresees the use of the same initial gear of the gear ratio stage B, then proceed to step v) otherwise proceed with steps iii) and iv);
- iii) engage by coupling means 23 a further gear involved in the requested gear ratio to the second range gear shaft;
- iv) swap clutches 13, 25, 17 involved in the torque transmission to pass from the initial gear to the further gear;
- v) swap clutches 13, 25, 17 involved in the torque transmission to pass to the requested gear ratio.

In view of the foregoing, the advantages of a transmission architecture 1 according to the invention and the related method are apparent.

The proposed arrangement allows to reduce the inertia at gear switching, thereby smoothing the gear switching. Furthermore, reduction of inertia allows to reduce the weight and the cost of manufacturing gears and shafts.

Furthermore, with respect to known arrangements, the proposed transmission uses less clutches thereby reducing their power consumption therefore increasing the efficiency of the transmission architecture.

Moreover, a reduced number countershafts is present, the passive inertia of the transmission are reduces, thereby further increasing the efficiency of this latter.

Furthermore, the number of gears controlled by coupling means is reduced, thereby further reducing weight and costs of manufacturing the transmission.

Finally the high number of gear ratios provided leads to a consistent advantages in covering a larger ground speed range with the same transmission architecture.

It is clear that modifications can be applied to the described transmission 1 which do not extend beyond the scope of protection defined by the claims.

For example, the number and typology of gears of gear ratio, range and idler gears may be varied according to vehicle necessity.

Further, the transmission may comprise different elements with respect to the described one, e.g. the number and/or typologies of clutches, gears and dog clutches may be varied. Accordingly, input stage A may be realized in any convenient manner.

Moreover, the control and typology of coupling means 30 may be implemented with any typology of control, e.g. a hydraulic, electric or pneumatic in alternative or in combinations.

## Claims

1. An architecture for a dual clutch transmission (1) for a work vehicle, said architecture (1) comprising:
• an input shaft (2) configured to be coupled to a power source (E) of said work vehicle,
• an output shaft (3) configured to be connected to a driving axle of said work vehicle,
• an input stage (A), a gear ratio stage (B) and a range gear ratio stage (C) operatively connected one to the other with respect to said input shaft (2) and said output shaft (3),
wherein said input stage (A) is configured to transmit torque from said input shaft (2) to said gear ratio stage (B) and comprises a first support shaft (6),
wherein said gear ratio stage (B) comprises an even-odd stage (B") and a first jump stage (B'), even-odd stage (B") and said first jump stages (B') both comprising a first and second shafts (11, 12),
the even-odd stage (B") comprising a first and a second plurality of gears (21, 22) respectively carried by said first and second shafts (11, 12), the plurality of gears (22) carried by said second shaft (12) being rotatably free carried by this latter and being selectively engaged at rotation via selection means (23), some among the plurality of gears (21) carried by said first shaft (11) being in rotatably free carried by this latter via an auxiliary shaft (24) rotatably carried by said first shaft (11) and being selectively engageable at rotation and others among the plurality of gears (21) carried by said first shaft (11) being fixedly carried by this latter,
the first jump stage (B') comprising a first, a second and a third clutch means (13, 17, 25) a second support shaft (16), a third support shaft (18), a first and a second gearings (14, 15),
wherein said first clutch means (13) are configured to connect said third support shaft (18) to said first support shaft (6), said second support shaft (16) is rotatably carried by said second shaft (12) and is selectively engaged at rotation with this latter by said second clutch means (17),
wherein said first gearing (14) comprises a pair of first gears (14", 15") rigidly carried by said third support shaft (18) and a pair of second gears (14', 15') selectively engageable to said second support shaft (16) via selection means (23),
said third clutch means (25) being configured to selectively couple said second gearing (15) to said auxiliary shaft (24), said second gearing (15) being configured to connect said second and third support shafts (16, 18) to said third clutch means (25),
wherein said second shaft (12) being connected via said range gear stage (C) to said output shaft (3).

2. Architecture according to claim 1, wherein said second gearing (15) connects said third support shaft (18) to said third clutch means (25).

3. Architecture according to claim 2, wherein said second gearing (15) defines a pair of gear reduction stages between said third clutch means (25) and said third support shaft (18).

4. Architecture according to claim 3, wherein said second gearing (15) defines said pair of gear reduction stages between said third clutch means (25) and an auxiliary shaft (27) rotatably free carried by said second shaft (12).

5. Architecture according to any of the preceding claims, wherein said auxiliary shaft (24) is selectively connectable to said first shaft (11) via selection means (23).

6. Architecture according to any of the preceding claims, wherein said range gear stage (C) comprises at a fourth support shaft (36) a first, a second, a third range gearings (31, 32, 33), said first range gearing (31) comprising a first gear (31') rotatably free carried by said second shaft (12) and a second gear (31") rotatably carried by said output shaft (3), said second range gearing (32) comprising a first gear (32') rotatably free carried by said second shaft (12) and a second gear (31") rotatably freed carried by said fourth support shaft (36) and said third gearing (33) comprises a first gear (33') fixedly carried by said second shaft (12) and a second gear (33") rotatably freed carried by said fourth support shaft (36),
wherein said first gears (31', 32') of said first and second range gearings (31, 32) are selectively fixed to said second shaft (12) via selection means (23), said second gears (31", 32") of said first and second range gearings (31, 32) are coupled by an additional gearing (37),
said second gears (32", 33") of said second and third range gearings (32, 33) being selectively engaged to said fourth support shaft (36) via clutch means (34),
said fourth support shaft (36) being operatively connected to said output shaft (3).

7. Architecture according to claim 6, wherein said fourth support shaft (36) is operatively connected to said output shaft (3) via a fourth range gearing (38).

8. Architecture according to any of the preceding claims, wherein said selection means (23) comprises a synchronizer or a dog clutch.

9. Architecture according to any of the preceding claims further comprising a control unit configured to control actuators configured to regulate the operation of said clutch means and said selection means (23).

10. Method for operating an architecture (1) as claimed in claim 9 for shifting from a gear ratio of the gear ratio stage (B) to a requested gear ratio of the gear ratio stage (B) and comprising the following steps:
• i) receiving an input for shifting from a gear ratio of gear ratio stage (B) to a requested gear ratio of the gear ratio stage (B);
• ii) if the requested gear ratio foresees the use of the same initial gear of the gear ratio stage (B), then proceed to step v) otherwise proceed with steps iii) and iv);
• iii) engage by coupling means (23) a further gear involved in the requested gear ratio to the second range gear shaft;
• iv) swap clutch means (13, 25, 17) involved in the torque transmission to pass from the initial gear to the further gear;
• v) swap clutch means (13, 25, 17) involved in the torque transmission to pass to the requested gear ratio.

## Patentansprüche

1. Architektur für ein Doppelkupplungsgetriebe (1) für ein Arbeitsfahrzeug, wobei die Architektur (1) Folgendes umfasst:
• eine Antriebswelle (2), die konfiguriert ist, um an eine Energiequelle (E) des Arbeitsfahrzeugs gekoppelt zu werden,
• eine Abtriebswelle (3), die konfiguriert ist, um mit einer Antriebsachse des Arbeitsfahrzeugs verbunden zu werden,
• eine Eingangsstufe (A), eine Übersetzungsstufe (B) und eine Bereichsübersetzungsstufe (C), die bezüglich der Antriebswelle (2) und der Abtriebswelle (3) miteinander wirkverbunden sind,
wobei die Eingangsstufe (A) konfiguriert ist, um Drehmoment von der Antriebswelle (2) auf die Übersetzungsstufe (B) zu übertragen, und eine erste Stützwelle (6) umfasst,
wobei die Übersetzungsstufe (B) eine Gerade-Ungerade-Stufe (B") und eine erste Sprungstufe (B') umfasst, wobei die Gerade-Ungerade-Stufe (B") und die ersten Sprungstufen (B') beide eine erste und zweite Welle (11, 12) umfassen,
die Gerade-Ungerade-Stufe (B") eine erste und eine zweite Vielzahl von Zahnrädern (21, 22) umfasst, die jeweils von der ersten und der zweiten Welle (11, 12) getragen werden, wobei die Vielzahl von Zahnrädern (22), die von der zweiten Welle (12) getragen werden, von letzterer frei drehbar getragen werden und über Auswahlmittel (23) selektiv in Dreheingriff gebracht werden, wobei einige aus der Vielzahl von Zahnrädern (21), die von der ersten Welle (11) getragen werden, von letzterer über eine Hilfswelle (24), die drehbar von der ersten Welle (11) getragen wird, frei drehbar getragen werden und selektiv in Dreheingriff bringbar sind, und andere aus der Vielzahl von Zahnrädern (21), die von der ersten Welle (11) getragen werden, von letzterer fest getragen werden,
die erste Sprungstufe (B') ein erstes, ein zweites und ein drittes Kupplungsmittel (13, 17, 25), eine zweite Stützwelle (16), eine dritte Stützwelle (18), ein erstes und ein zweites Getriebe (14, 15) umfasst,
wobei das erste Kupplungsmittel (13) dazu konfiguriert ist, um die dritte Stützwelle (18) mit der ersten Stützwelle (6) zu verbinden, die zweite Stützwelle (16) drehbar von der zweiten Welle (12) getragen wird und durch das zweite Kupplungsmittel (17) selektiv mit letzterer in Dreheingriff gebracht wird,
wobei das erste Getriebe (14) ein Paar erster Zahnräder (14", 15") umfasst, die starr
von der dritten Stützwelle (18) getragen werden, und ein Paar zweiter Zahnräder (14', 15'), die über Auswahlmittel (23) selektiv mit der zweiten Stützwelle (16) in Eingriff bringbar sind,
wobei das dritte Kupplungsmittel (25) konfiguriert ist, um das zweite Getriebe (15) selektiv mit der Hilfswelle (24) zu koppeln, wobei das besagte zweite Getriebe (15) konfiguriert ist, um die zweite und dritte Stützwelle (16, 18) mit dem dritten Kupplungsmittel (25) zu verbinden,
wobei die zweite Welle (12) über die Bereichsübersetzungsstufe (C) mit der Abtriebswelle (3) verbunden ist.

2. Architektur nach Anspruch 1, wobei das zweite Getriebe (15) die dritte Stützwelle (18) mit dem dritten Kupplungsmittel (25) verbindet.

3. Architektur nach Anspruch 2, wobei das zweite Getriebe (15) ein Paar von Untersetzungsstufen zwischen dem dritten Kupplungsmittel (25) und der dritten Stützwelle (18) definiert.

4. Architektur nach Anspruch 3, wobei das zweite Getriebe (15) das Paar von Untersetzungsstufen zwischen dem dritten Kupplungsmittel (25) und einer Hilfswelle (27), die von der zweiten Welle (12) frei drehbar getragen wird, definiert.

5. Architektur nach einem der vorstehenden Ansprüche, wobei die Hilfswelle (24) über Auswahlmittel (23) selektiv mit der ersten Welle (11) verbindbar ist.

6. Architektur nach einem der vorstehenden Ansprüche, wobei die Bereichsübersetzungsstufe (C) an einer vierten Stützwelle (36) ein erstes, ein zweites, ein drittes Bereichsgetriebe (31, 32, 33) umfasst, wobei das erste Bereichsgetriebe (31) ein erstes Zahnrad (31'), das frei drehbar von der zweiten Welle (12) getragen wird, und ein zweites Zahnrad (31"), das drehbar von der Abtriebswelle (3) getragen wird, umfasst, wobei das zweite Bereichsgetriebe (32) ein erstes Zahnrad (32'), das frei drehbar von der zweiten Welle (12) getragen wird, und ein zweites Zahnrad (31"), das frei drehbar von der vierten Stützwelle (36) getragen wird, umfasst, und das dritte Getriebe (33) ein erstes Zahnrad (33'), das fest von der zweiten Welle (12) getragen wird, und ein zweites Zahnrad (33"), das frei drehbar von der vierten Stützwelle (36) getragen wird, umfasst,
wobei die ersten Zahnräder (31', 32') des ersten und zweiten Bereichsgetriebes (31, 32) über Auswahlmittel (23) selektiv mit der zweiten Welle (12) befestigt sind, die zweiten Zahnräder (31", 32") des ersten und zweiten Bereichsgetriebes (31, 32) durch ein zusätzliches Getriebe (37) gekoppelt sind, wobei die zweiten Zahnräder (32", 33") des zweiten und dritten Bereichsgetriebes (32, 33) über Kupplungsmittel (34) selektiv mit der vierten Stützwelle (36) in Eingriff stehen, wobei die vierte Stützwelle (36) mit der Abtriebswelle (3) wirkverbunden ist.

7. Architektur nach Anspruch 6, wobei die vierte Stützwelle (36) über ein viertes Bereichsgetriebe (38) mit der Abtriebswelle (3) wirkverbunden ist.

8. Architektur nach einem der vorstehenden Ansprüche, wobei das Auswahlmittel (23) eine Synchronisiereinrichtung oder eine Klauenkupplung umfasst.

9. Architektur nach einem der vorstehenden Ansprüche, ferner umfassend eine Steuereinheit, die konfiguriert ist, um Aktuatoren zu steuern, die konfiguriert sind, um den Betrieb der Kupplungsmittel und der Auswahlmittel (23) zu regeln.

10. Verfahren zum Betreiben einer Architektur (1) nach Anspruch 9 zum Schalten von einem Übersetzungsverhältnis der Übersetzungsstufe (B) in ein angefordertes Übersetzungsverhältnis der Übersetzungsstufe (B) und umfassend die folgenden Schritte:
• i) Empfangen einer Eingabe zum Schalten von einem Übersetzungsverhältnis der Übersetzungsstufe (B) in ein angefordertes Übersetzungsverhältnis der Übersetzungsstufe (B);
• ii) wenn das angeforderte Übersetzungsverhältnis die Verwendung desselben Anfangszahnrads der Übersetzungsstufe (B) vorsieht, dann zu Schritt v) übergehen, andernfalls mit den Schritten iii) und iv) fortfahren;
• iii) mittels Kupplungsmittel (23) ein weiteres Zahnrad, das an dem angeforderten Übersetzungsverhältnis beteiligt ist, mit der zweiten Bereichsgetriebewelle in Eingriff bringen;
• iv) Wechseln der Kupplungsmittel (13, 25, 17), die an der Drehmomentübertragung beteiligt sind, um von dem Anfangszahnrad zu dem weiteren Zahnrad überzugehen;
• v) Wechseln der Kupplungsmittel (13, 25, 17), die an der Drehmomentübertragung beteiligt sind, um zu dem angeforderten Übersetzungsverhältnis überzugehen.

## Revendications

1. Architecture pour une transmission à double embrayage (1) pour un véhicule de travail, ladite architecture (1) comprenant :
• un arbre d'entrée (2) conçu pour être accouplé à une source d'alimentation (E) dudit véhicule de travail,
• un arbre de sortie (3) conçu pour être relié à un essieu moteur dudit véhicule de travail,
• un étage d'entrée (A), un étage de rapport de vitesse (B) et un étage de rapport de vitesse de plage (C) reliés de manière fonctionnelle l'un à l'autre par rapport audit arbre d'entrée (2) et audit arbre de sortie (3),
dans lequel ledit étage d'entrée (A) est conçu pour transmettre un couple dudit arbre d'entrée (2) audit étage de rapport de vitesse (B) et comprend un premier arbre de support (6),
dans lequel ledit étage de rapport de vitesse (B) comprend un étage pair-impair (B") et un premier étage de saut (B'), un étage pair-impair (B") et ledit premier étage de saut (B') comprenant tous deux des premier et second arbres (11, 12),
l'étage pair-impair (B") comprenant une première et une seconde pluralité de pignons (21, 22) respectivement portés par lesdits premier et second arbres (11, 12), la pluralité de pignons (22) portés par ledit second arbre (12) étant portés de manière libre en rotation par ce dernier et étant sélectivement mis en prise en rotation par l'intermédiaire d'un moyen de sélection (23), certains parmi la pluralité de pignons (21) portés par ledit premier arbre (11) étant portés de manière libre en rotation par ce dernier par l'intermédiaire d'un arbre auxiliaire (24) porté en rotation par ledit premier arbre (11) et pouvant sélectivement venir en prise lors de la rotation, et d'autres parmi la pluralité de pignons (21) portés par ledit premier arbre (11) étant portés de manière fixe par ce dernier,
le premier étage de saut (B') comprenant un premier, un deuxième et un troisième moyen d'embrayage (13, 17, 25), un deuxième arbre de support (16), un troisième arbre de support (18), un premier et un deuxième engrenage (14, 15),
dans lequel ledit premier moyen d'embrayage (13) est conçu pour relier ledit troisième arbre de support (18) audit premier arbre de support (6), ledit deuxième arbre de support (16) est porté de manière rotative par ledit second arbre (12) et est sélectivement mis en prise en rotation avec ce dernier par ledit deuxième moyen d'embrayage (17),
dans lequel ledit premier engrenage (14) comprend une paire de premiers pignons (14", 15") portés rigidement par
ledit troisième arbre de support (18) et une paire de seconds pignons (14', 15') pouvant sélectivement venir en prise avec ledit deuxième arbre de support (16) par l'intermédiaire d'un moyen de sélection (23),
ledit troisième moyen d'embrayage (25) étant conçu pour accoupler sélectivement ledit deuxième engrenage (15) audit arbre auxiliaire (24), ledit deuxième engrenage (15) étant conçu pour relier lesdits deuxième et troisième arbres de support (16, 18) audit troisième moyen d'embrayage (25),
dans laquelle ledit second arbre (12) est relié par l'intermédiaire dudit étage d'engrenage de plage (C) audit arbre de sortie (3).

2. Architecture selon la revendication 1, dans laquelle ledit deuxième engrenage (15) relie ledit troisième arbre de support (18) audit troisième moyen d'embrayage (25).

3. Architecture selon la revendication 2, dans laquelle ledit deuxième engrenage (15) définit une paire d'étages de réduction de vitesse entre ledit troisième moyen d'embrayage (25) et ledit troisième arbre de support (18).

4. Architecture selon la revendication 3, dans laquelle ledit deuxième engrenage (15) définit ladite paire d'étages de réduction de vitesse entre ledit troisième moyen d'embrayage (25) et un arbre auxiliaire (27) porté de manière libre en rotation par ledit second arbre (12).

5. Architecture selon l'une quelconque des revendications précédentes, dans laquelle ledit arbre auxiliaire (24) peut être sélectivement relié audit premier arbre (11) par l'intermédiaire d'un moyen de sélection (23).

6. Architecture selon l'une quelconque des revendications précédentes, dans laquelle ledit étage d'engrenage de plage (C) comprend, au niveau d'un quatrième arbre de support (36), un premier, un deuxième, un troisième engrenage de plage (31, 32, 33), ledit premier engrenage de plage (31) comprenant un premier pignon (31') porté de manière libre en rotation par ledit second arbre (12) et un second pignon (31") porté de manière rotative par ledit arbre de sortie (3), ledit deuxième engrenage de plage (32) comprenant un premier pignon (32') porté de manière libre en rotation par ledit second arbre (12) et un second pignon (31") porté de manière libre en rotation par ledit quatrième arbre de support (36) et ledit troisième engrenage (33) comprend un premier pignon (33') porté fixement par ledit second arbre (12) et un second pignon (33") porté de manière libre en rotation par ledit quatrième arbre de support (36),
dans lequel lesdits premiers pignons (31', 32') desdits premier et second engrenages de plage (31, 32) sont sélectivement fixés audit second arbre (12) par l'intermédiaire d'un moyen de sélection (23), lesdits seconds pignons (31", 32") desdits premier et second engrenages de plage (31, 32) sont accouplés par un engrenage supplémentaire (37), lesdits seconds pignons (32", 33") desdits deuxième et troisième engrenages de plage (32, 33) étant sélectivement mis en prise avec ledit quatrième arbre de support (36) par l'intermédiaire d'un moyen d'embrayage (34), ledit quatrième arbre de support (36) étant relié de manière fonctionnelle audit arbre de sortie (3).

7. Architecture selon la revendication 6, dans laquelle ledit quatrième arbre de support (36) est relié de manière fonctionnelle audit arbre de sortie (3) par l'intermédiaire d'un quatrième engrenage de plage (38).

8. Architecture selon l'une quelconque des revendications précédentes, dans laquelle ledit moyen de sélection (23) comprend un synchroniseur ou un embrayage à griffes.

9. Architecture selon l'une quelconque des revendications précédentes, comprenant en outre une unité de commande configurée pour commander des actionneurs configurés pour réguler le fonctionnement dudit moyen d'embrayage et dudit moyen de sélection (23).

10. Procédé permettant le fonctionnement d'une architecture (1) selon la revendication 9 pour passer d'un rapport de vitesse de l'étage de rapport de vitesse (B) à un rapport de vitesse demandé de l'étage de rapport de vitesse (B) et comprenant les étapes suivantes :
• i) la réception d'une entrée pour passer d'un rapport de vitesse de l'étage de rapport de vitesse (B) à un rapport de vitesse demandé de l'étage de rapport de vitesse (B) ;
• ii) si le rapport de vitesse demandé prévoit l'utilisation du même rapport initial de l'étage de rapport de vitesse (B), passer à l'étape v) sinon, passer aux étapes iii) et iv) ;
• iii) mettre en contact, par un moyen d'accouplement (23), un autre pignon impliqué dans le rapport de vitesse demandé avec le second arbre de vitesse de plage ;
• iv) intervertir les moyens d'embrayage (13, 25, 17) impliqués dans la transmission de couple pour passer du rapport initial au rapport suivant ;
• v) intervertir les moyens d'embrayage (13, 25, 17) impliqués dans la transmission de couple pour passer au rapport de vitesse demandé.
